# EUROPEAN PATENT APPLICATION

(11) **EP 2 708 769 A1**
(43) Date of publication of application: **19.03.2014**
(21) Application number: 13184277.5
(22) Date of filing: 13.09.2013
(51) Int. Cl.: F16D 41/067, F16H 55/36

(54) **Pulley assembly, in particular for vehicle alternators**

(30) Priority: 13.09.2012 IT BO20120483
(71) Applicant: MITEC S.r.l. con unico socio, Cesena (IT)
(72) Inventor: Pagliarani, Imerio, 47035 Gambettola (IT); Paoli, Giuseppe, 47521 Cesena (IT)
(74) Representative: Manconi, Stefano

(57) **Abstract**

A pulley assembly has a rotating pulley (2) angularly locked on a transmission shaft (5) by means of a polygonal ring (8), which is angularly integral to the transmission shaft (5), is radially delimited by a plurality of flat outer faces (9), and is provided with a plurality of teeth (10), which project radially outwards from the polygonal ring (8), and are shaped so as to lock a pocket cage (15) on the transmission shaft (5) both radially and tangentially; each pocket (17) housing a rolling member (21), which is mounted between the pulley (2) and a respective outer face (9) of the polygonal ring (8), and is maintained by a spring (23) in a locking position of the pulley (2) on the transmission shaft (5).

## Description

The present invention relates to a pulley assembly, in particular for vehicle alternators.

The present invention is advantageously applied to the automotive sector for connecting the internal combustion engine to the alternator of a vehicle, to which explicit reference will be made in the description that follows without because of this loosing in generality.

In particular, the present invention relates to a pulley assembly of the type comprising a pulley mounted to rotate about a given rotation axis; a transmission shaft, which is mounted in a rotatory manner through the pulley coaxial to said rotation axis; and a coupling device for angularly locking the pulley to the transmission shaft itself.

Generally, the coupling device comprises a polygonal ring, which is angularly integral to the transmission shaft and is radially delimited by a plurality of flat outer faces uniformly distributed around said rotation axis; a pocket cage, which extends around the polygonal ring, is coupled to the transmission shaft in an angularly fixed manner and has a plurality of pockets, which are distributed around said rotation axis; and a respective roll for each one of said outer faces, which is mounted inside a respective pocket between the pulley and the flat outer face of the polygonal ring; and for each outer flat face of the polygonal ring a respective roll mounted in a respective pocket between the pulley and the polygonal ring and a respective spring interposed between the pocket cage and the roll itself.

Since each roll is inserted between the inner cylindrical surface of the pulley and a respective flat outer face of the polygonal ring, the roll is mobile in a wedge-shaped space, and is moved to, and normally maintained by the aforesaid spring in, a locking position, in which the roll is arranged at the narrower side of the wedge-shaped space so as to angularly lock the pulley and the transmission shaft to each other.

Consequently, when the pulley is rotated by the drive shaft of the vehicle and the rolls are arranged in the locking positions thereof, the pulley and the transmission shaft are locked in angularly fixed manner to one another and rotate about the rotation axis with respective mutually identical laws of motion.

On the contrary, when the rotation speed of the drive shaft, and thus of the pulley, decreases, each roll is moved against the bias of a respective spring to a releasing position, in which the roll is arranged at the longer side of the mentioned wedge-shaped space to release the transmission shaft from the pulley. Releasing the transmission shaft from the pulley allows the transmission shaft to continue to rotate by inertia at a rotation speed which is greater than the rotation speed of the pulley and of the alternator to maintain a relatively high efficiency.

The known pulley assemblies of the type described above have some drawbacks mainly deriving from the fact that the pocket cage has a polygonal profile coupled to the flat outer faces of the polygonal ring in order to couple in angularly fixed manner to the transmission shaft and is thus relatively complex and costly.

Furthermore, the known pulley assemblies of the type described above have the further drawback deriving from the fact that the pocket cage arranged at a given radial distance from the inner surface of the pulley may be radially deformed due to the relatively high centrifuge forces thus compromising the correct operation of the mentioned coupling device.

It is the object of the present invention to provide a pulley assembly, in particular for vehicle alternators, which is free from the above-described drawbacks, and which is simple and cost-effective to be implemented.

According to the present invention, there is provided a pulley assembly, in particular for vehicle alternators, as disclosed in the appended claims.

The present invention will now be described with reference to the accompanying drawings, which show a non-limitative embodiment thereof, in which:
figure 1 is a diagrammatic cross view of a preferred embodiment of the pulley assembly according to the present invention;
figure 2 is a section taken along line II-II of the pulley assembly in figure 1;
figure 3 is a section taken along line III-III in figure 2;
figure 4 is a diagrammatic prospective view of a first detail in figure 3; and
figure 5 is a diagrammatic front view, with parts removed for clarity, of a second detail of figure 3.

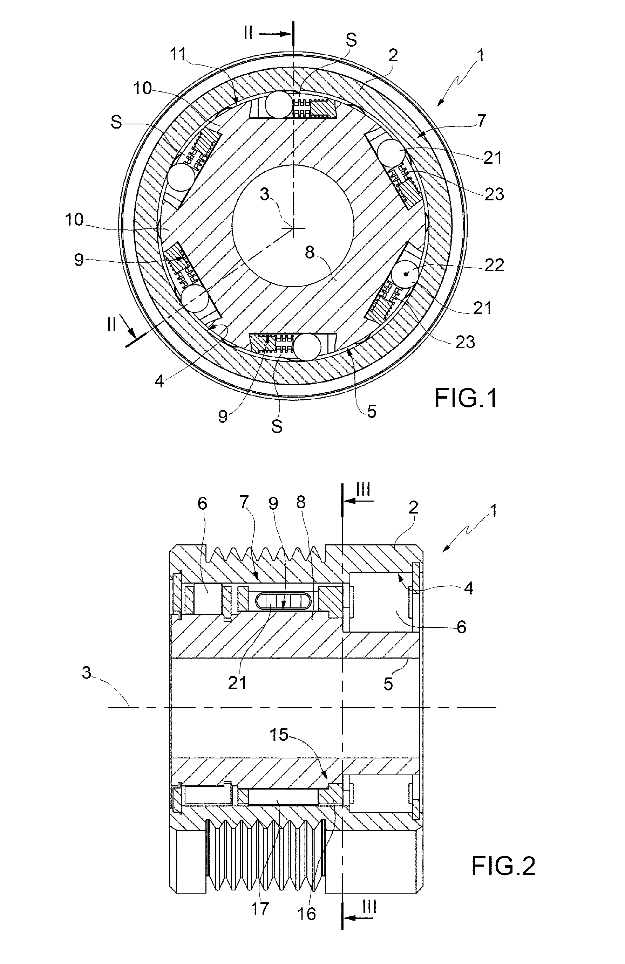

With reference to figures 1 and 2, reference numeral 1 indicates as a whole a pulley assembly comprising a cylindrical pulley 2, which is mounted to rotate about a rotation axis 3, is delimited by an inner surface 4 with a cylindrical shape, and is connected to the drive shaft of an internal combustion engine (not shown) by means of a drive belt (known and not shown).

The pulley assembly 1 further comprises a tubular transmission shaft 5, which extends through the pulley 2 coaxially to the axis 3, is coupled in rotatory manner to the pulley 2 by means of the interposition of a pair of rolling bearings 6, and is further coupled in angularly fixed manner to an input shaft of an alternator (not shown).

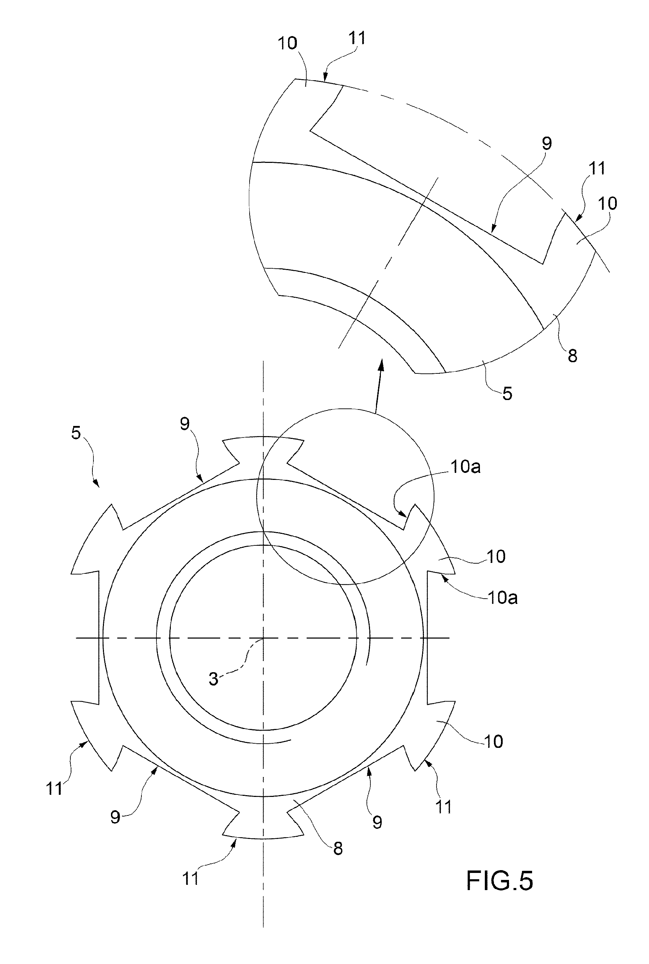

The shaft 5 is selectively locked on the pulley 2 by means of a coupling device 7 comprising a polygonal ring 8 (figure 5), which is obtained in the case in point in one single part with the shaft 5, extends between the two bearings 6 coaxially to the axis 3, and is radially delimited by a plurality of flat outer faces 9 (in the case in point, six faces 9) uniformly distributed about the axis 3 itself.

According to a variant not shown, the shaft 5 and the ring 8 are two separate parts coupled in angularly fixed manner to each other.

The ring 8 further has a plurality of teeth 10, which are uniformly distributed about the axis 3, are equal to the number of faces 9 and project radially outwards from the outer surface of the ring 8.

Each tooth 10 extends between two mutually adjacent faces 9, and is radially delimited by an outer surface 11 with a substantially circular shape.

The tooth 10 has a dovetail-shaped transversal section on a plane perpendicular to the axis 3 and is delimited by two lateral sides 10a, which diverge at least in part outwards with respect to a radial symmetric plane of the tooth 10 itself.

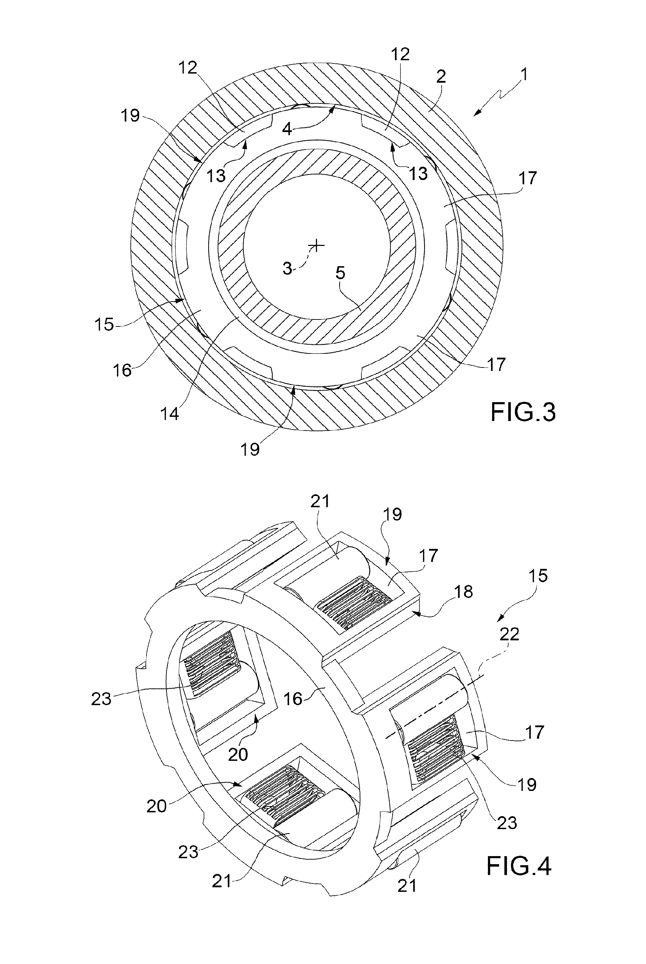

The tooth 10 is further axially delimited by two free ends one of which is relieved to define a projection 12 (figure 3), which is delimited by an inner surface 13 of substantially circular shape, and radially faces a cylindrical portion 14 of the shaft 5.

Each face 9 delimits together with the surface 4 of the pulley 2 a wedge-shaped space S delimited tangentially by two teeth 10.

As shown in figures 1 and 4, the device 7 further comprises a pocket cage 15 comprising in turn a support ring 16, which has a circular shape, is fitted on the portion 14 coaxial to the axis 3, and is radially blocked between the projections 12 and the portion 14 itself.

The cage 15 further comprises a plurality of pockets 17, which are equal in number to the number of faces 9 and of the teeth 10, and are uniformly distributed about the axis 3.

Each pocket 17 projects axially from the ring 16 so as to define together with each adjacent pocket 17 and the ring 16, a recess 18 adapted to receive and withhold a respective tooth 10, and is radially delimited by an outer surface 19 with a substantially cylindrical shape and an inner surface 20 with a substantially flat shape.

The cage 15 is coupled in sliding manner to the ring 8 so as to allow each pocket 17 to be engaged between two respective teeth 10 over a respective face 9 and to allow each tooth 10 to be engaged within a respective recess 18.

Each pocket 17 accommodates therein a roll 21, which has a longitudinal axis 22 parallel to the axis 3, and is mounted within the respective space S, and a spring 23 interposed between the pocket 17 and the roll 21 itself.

The roll 21 is moved to, and normally maintained by the spring 23 in a locking position in which the roll 21 is arranged at the narrower side of the space S so as to angularly lock the pulley 2 and the shaft 5 to one another.

Consequently, when the pulley 2 is rotated by the mentioned drive shaft of the vehicle (not shown) and the rolls 21 are arranged in their locking positions, the pulley 2 and the transmission shaft 5 are locked in angularly fixed manner to one another and rotate about the rotation axis 3 with respective mutually identical laws of motion.

On the contrary, when the rotation speed of the mentioned drive shaft of the vehicle (not shown), and thus of the pulley 2, decreases, each roll 21 is moved against the bias of the respective spring 23 to a releasing position in which the roll 21 is arranged at the wider side of the mentioned wedge-shaped space S to release the transmission shaft 5 from the pulley 2. Releasing the shaft 5 from the pulley 2 allows the shaft 5 to continue to rotate by inertia at a rotation speed which is greater than the rotation speed of the pulley 2 and of the alternator (not shown) to maintain a relatively high efficiency.

The shape of the polygonal ring 8 and the presence of the teeth 10 allow to make a support ring 16 with a circular shape and thus to angularly lock the pocket cage 15 to the transmission shaft 5 in relatively simple, cost-effective manner.

The diverging shape of the lateral sides 10a allows to lock the cage 15 onto the shaft 5 in radial direction and thus avoid radial deformations of the cage 15 itself.

## Claims

1. A pulley assembly, in particular for vehicle alternators, comprising a pulley (2), which is mounted so as to rotate around a given rotation axis (3); a transmission shaft (5), which is mounted in a rotatory manner through the pulley (2) coaxial to said rotation axis (3); and a coupling device (7) for angularly locking the pulley (2) to the transmission shaft (5) itself; the coupling device (7) comprising a polygonal ring (8), which is angularly integral to the transmission shaft (5), and is radially delimited by a plurality of flat outer faces (9), which are uniformly distributed about said rotation axis (3); a pocket cage (15), which extends around the polygonal ring (8), is coupled to the transmission shaft (5) in an angularly fixed manner, and has a plurality of pockets (17), which are distributed around said rotation axis (3); and, for each one of said outer faces (9), a respective rolling member (21), which is mounted inside a respective pocket (17) between the pulley (2) and the outer face (9), and a respective spring (23), which is interposed between the pocket cage (15) and the rolling member (21) so as to move the rolling member (21) itself to, and normally maintain it in, a position in which the pulley (2) is locked to the transmission shaft (5); and **characterized in that** the polygonal ring (8) has a plurality of teeth (10), which radially project outwards from the polygonal ring (8), each extend between two respective outer faces (9) adjacent to each other, and are shaped so as to lock the pocket cage (15) both radially and tangentially.

2. A pulley assembly according to claim 1, wherein the number of teeth (10) and pockets (17) is equal to the number of said outer faces (9).

3. A pulley assembly according to claim 1 or 2, wherein each tooth (10) has a dovetail-shaped transverse section on a plane perpendicular to said rotation axis (3) and is delimited by two lateral sides (10a), which diverge at least in part outwards with respect to a radial symmetry plane of the tooth (10) itself.

4. A pulley assembly according to any one of the preceding claims, wherein the pocket cage (15) further comprises a support ring (16) with a circular shape, which is radially locked between the transmission shaft (5) and a free end of each tooth (10); each pocket (17) axially projecting from the support ring (16).

5. A pulley assembly according to claim 4, wherein each pocket (17) axially projects from the support ring (16), so as to define, together with an adjacent pocket (17) and with the support ring (16) itself, a recess (18), which is engaged in a sliding manner by a respective said tooth (10).

6. A pulley assembly according to any one of the preceding claims, wherein each tooth (10) is radially delimited by an outer surface (11) with a substantially circular shape.

7. A pulley assembly according to any one of the preceding claims, wherein each pocket (17) is radially delimited by an outer surface (19) with a substantially circular shape and by an inner surface (20) with a substantially flat shape.

8. A pulley assembly according to any one of the preceding claims, wherein the polygonal ring (8) is made in one piece together with the transmission shaft (5).

9. A pulley assembly according to any of the claims from 1 to 7, wherein the polygonal ring and the transmission shaft (5) are two separate pieces, which are coupled to one another in an angularly fixed manner.

10. A pulley assembly according to any of the previous claims, wherein each one of said outer faces (9) delimits a wedge-shaped space (S), together with an inner surface (4) of the pulley (2), within which the respective rolling member (21) is tangentially mobile.

11. A pulley assembly according to any one of the preceding claims, wherein each tooth (10) is engaged by two said pockets (17) in a sliding manner, parallel to the rotation axis (3).
